# FASCICULE DE BREVET EUROPEEN

(11) **EP 1 365 055 B1**
(45) Date de publication et mention de la délivrance du brevet: **02.09.2009**
(21) Numéro de dépôt: 03356078.0
(22) Date de dépôt: 19.05.2003
(51) Int. Cl.: D04H 13/00, B32B 5/26, B29C 70/48

(54) **Renfort fibreux à fonction de barrière pour la réalisation de pièces composites et pièces composites en faisant application**
Als Sperrschicht dienendes verstärktes Fasermaterial für die Herstellung von Verbundwerkteilen
Fibrous reinforcing material acting as a barrier for the manufacturing of composite workpieces

(30) Priorité: 21.05.2002 FR 0206154
(43) Date de publication de la demande: 26.11.2003
(73) Titulaire: CHOMARAT COMPOSITES, 75002 Paris (FR)
(72) Inventeur: Baudonnel, Jacques, 07160 Le Cheylard (FR)
(74) Mandataire: Sarlin, Laure V.

(56) Documents cités:
- EP-A- 0 786 330
- EP-A- 1 086 801
- FR-A- 2 646 442
- FR-A- 2 734 847
- US-A- 5 569 344
- PATENT ABSTRACTS OF JAPAN vol. 2000, no. 07, 29 septembre 2000 (2000-09-29) & JP 2000 108233 A (TOYODA SPINNING &WEAVING CO LTD; TOYOTA MOTOR CORP), 18 avril 2000 (2000-04-18) -& JP 2000 108233 A (TOYODA SPINNING & WEAVING CO LTD; TOYOTA MOTOR CORP) 18 avril 2000 (2000-04-18)

## Description

La présente invention est relative au domaine technique de la production de matériaux ou pièces composites conformées ou non qui peuvent être utilisées directement ou après transformation ou association pour former notamment des structures ou articles en forme recherchés dans de très nombreuses applications. Plus précisément, l'invention a pour objet un renfort fibreux pour la réalisation de pièces composites qui joue le rôle de barrière pour les résines injectées, ainsi que les pièces composites comprenant un tel renfort.

De manière à allier une légèreté certaine à une résistance mécanique convenable, les pièces composites de l'art antérieur allient généralement au moins une armature de renfort, généralement du type textile ou assimilé, à une matrice de résine, le plus souvent de type thermodurcissable, dans laquelle ladite armature est noyée pour être présente, soit à coeur de l'épaisseur de la pièce constituée, soit en surface.

Il peut être estimé que ces techniques bien maîtrisées donnent satisfaction dans la plupart des applications. Dans certains cas, il est souhaité disposer de renforts de forte épaisseur comme cela est recherché dans certaines applications, comme par exemple des pièces planes ou en forme telles que des éléments de carrosserie, de bateaux de plaisance, de citernes, voire d'aéronefs. Il a d'ailleurs été proposé des armatures textiles telles que celles enseignées par le brevet FR 2 646 442 ou encore par le brevet FR 2 734 847.

De plus en plus, il est nécessaire de disposer de techniques simples et à faible coût, permettant de réaliser des préformes pour des parois à la fois épaisses et légères ou pour des corps à la fois volumiques et légers. Lors de la conception de tels préformes, une résine thermodurcissable à l'état liquide est injectée d'un côté du renfort disposé selon la forme souhaitée. Il est donc indispensable de disposer de renfort qui, de part leur nature, empêche la migration de la résine au travers du renfort, avant que celle-ci ne polymérise.

De plus, il est souvent envisagé d'injecter de part et d'autre du renfort des résines de nature différente. Il est, par exemple, nécessaire d'injecter en position centrale de la pièce composite une résine par exemple moussante donnant son volume à la pièce composite, tout en présentant un poids réduit et une autre résine à fonction mécanisante en périphérie, afin de consolider ses parois externes.

En général, il est nécessaire de réaliser une première âme dans un premier moule en injectant une résine par exemple du polyuréthane. Ensuite, cette âme en polyuréthane doit être sablée pour lui conférer une adhésion, étant donné que suite au moulage la surface du polyuréthane présente un état de surface lisse, après dépôt de cire. Enfin, cette âme en polyuréthane est disposée dans un deuxième moule avec le renfort textile pour injecter la deuxième résine.

Il est donc le plus souvent nécessaire de réaliser une préforme constituée de l'âme en polyuréthane associée au renfort fibreux utilisé pour la deuxième injection. La réalisation de pièces composites est donc effectuée en deux étapes de moulage avec deux moules légèrement modifiés, l'un pour la première injection, l'autre pour la deuxième injection.

Dans ce contexte, l'un des objectifs de l'invention est de fournir un produit de renfort suffisamment étanche pour assumer une fonction de barrière entre les deux milieux qu'ils départagent, afin de préserver leur intégrité. L'objectif d'étanchéité peut être attaché au confinement dans les deux milieux ou encore à la nécessité de contrôler la migration d'un produit de revêtement, voir de décoration, susceptible d'être appliqué sur l'une des faces de la pièce composite finale ou du renfort. Un tel renfort permettra notamment de réaliser des pièces moulées en une seule étape.

L'objet de l'invention est de répondre à cette exigence en proposant des perfectionnements aux renforts textiles, de telle manière que ces renforts puissent répondre à une fonction seconde de barrière pour la ou les résines injectées et éventuellement pour un produit de revêtement ou de décoration susceptible d'être appliqué sur la pièce composite ou directement sur l'une des grandes faces du renfort.

Le renfort selon l'invention se doit également de posséder des propriétés de surface adéquates pour permettre l'accrochage des résines ultérieurement injectées.

Pour atteindre ces objectifs, selon l'invention le renfort fibreux pour la réalisation de pièces composites moulées à base de résine injectée, comprend au moins une nappe à base de fibres de renfort. Ladite nappe est liée par couture ou tricotage à une feuille en élastomère s'étendant sur l'une des grandes faces de la nappe et assumant une fonction de barrière pour toute résine injectée d'un côté ou de l'autre de cette feuille, ladite feuille en élastomère étant associée à un non-tissé, sur au moins l'une de ses faces, pour améliorer l'adhérence d'une résine injectée de ce côté de la feuille.

L'invention a encore pour objet une pièce composite obtenue à partir d'un renfort fibreux selon l'invention et d'au moins deux matrices de résine thermodurcissable ou thermoplastique confinées chacune de part et d'autre du renfort fibreux.

Diverses autres caractéristiques ressortent de la description faite ci-dessous en référence aux dessins annexés qui montrent, à titre d'exemples non limitatifs, des formes de réalisation et de mise en oeuvre de l'objet de l'invention.

La **fig. 1** est une perspective, en partie arrachée, illustrant une première forme de réalisation du renfort fibreux conforme à l'invention.

La **fig. 2** est une coupe-élévation transversale partielle, à plus grande échelle, du renfort fibreux selon la fig. 1.

La **fig. 3** est une coupe-élévation transversale partielle, conforme à la **fig. 2** illustrant une autre variante de réalisation de l'objet de l'invention.

La **fig. 4** est une coupe partielle, à échelle différente, d'une pièce composite obtenue à partir d'un renfort fibreux selon l'invention.

L'invention est relative à un renfort fibreux spécifiquement à fonction étanche pour la réalisation de pièces composites, moulées ou non, à base de résine thermodurcissable injectée, de telle sorte que ce renfort fibreux constitue une armature de renfort de type textile, noyée pour partie au moins dans une matrice de résine en particulier thermodurcissable ou thermoplastique.

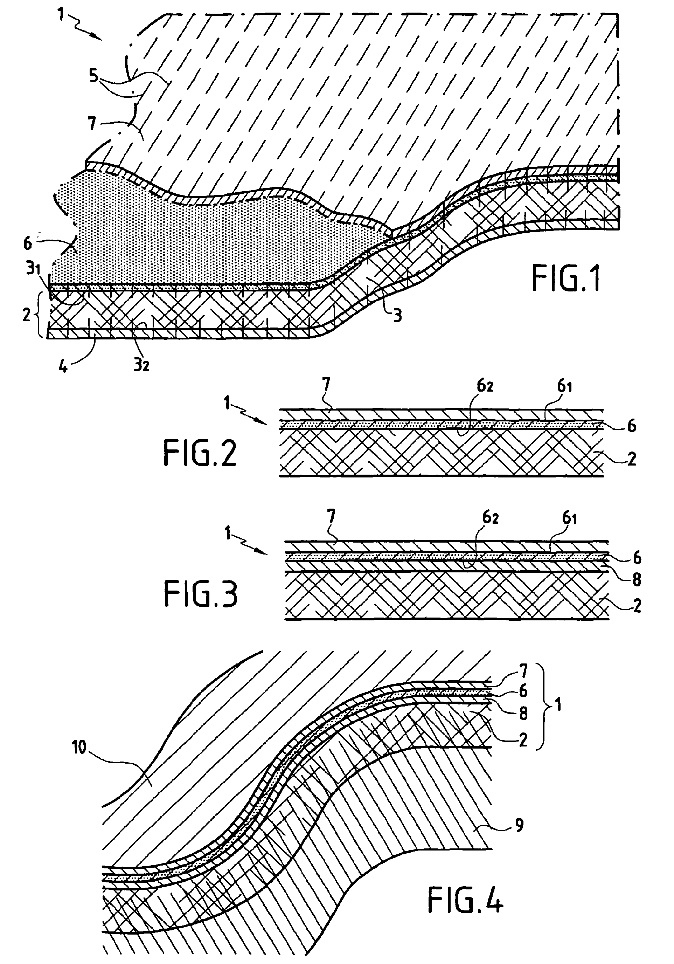

Le renfort fibreux selon l'invention désigné dans son ensemble par la référence **1** se présente dans une forme de réalisation, comme cela est illustré par les **fig. 1** et **2****.**

Un tel renfort comprend une nappe **2** à base de fibres de renfort, à fonction essentielle d'armature de renforcement qui est caractérisée par une épaisseur notable. Il doit être rappelé que l'invention s'applique tout autant aux armatures de renfort qui sont de faible épaisseur et, en conséquence, la forme de réalisation selon la **fig. 1** n'est donnée qu'à titre d'exemple.

Dans cet exemple, la nappe **2** est constituée essentiellement par une âme **3** à base de fibres appropriées. Préférentiellement mais non limitativement, de telles fibres ont subi un traitement de frisure pour conférer à l'âme **3** des caractéristiques de légèreté et d'épaisseur ainsi qu'une texture aérée. Dans un exemple, l'âme **3** peut être constituée à base de fibres de polyester ou polypropylène possédant un titre au moins égal à 30 decitex (dtex), une longueur de coupe comprise entre 40 et 110 mm et qui ont reçu préalablement à leur mise en forme sous nappe, un traitement de texturation leur conférant une frisure permanente.

Comme cela est présenté aux **fig. 1** et **2****,** l'âme **3** est avantageusement associée, sur l'une de ses faces par exemple **3₂,** à une couche textile de renfort telle que **4.** La couche de renfort **4** peut être avantageusement composée de nappes fibreuses telles que des nappes de fibres de verre et/ou carbone et/ou aramide, des nappes unies ou bidirectionnelles ou encore des fils jointifs ou contigus ou espacés, réalisés en verre, en carbone ou en aramide. Il doit être retenu que la nappe **2** peut aussi être constituée par une pluralité d'âmes **3** ou de matériaux ayant une fonction de fluage ou drainage de la résine et de couches **4** et que dans la plupart des cas, cette nappe **2** présente une capacité de déformabilité et de souplesse la rendant apte à épouser des conformations variées.

Le renfort fibreux selon l'invention comprend en outre, sur l'une des faces de la nappe **2**, une feuille **6** en élastomère qui est destinée à assumer une fonction de barrière, de telle manière qu'une matrice de résine thermodurcissable injectée d'un côté ou de l'autre du renfort reste confinée de ce même côté, sa migration étant empêchée par la feuille **6** souple en élastomère. Comme le montrent les **fig. 1** et **2****,** l'âme **3** est associée, sur l'une de ses faces **3₂,** à la couche textile de renfort **4** et sur son autre face **3₁** à la feuille **6** en élastomère.

Cette feuille **6** en élastomère est en une matière à la fois souple, déformable et élastique. On utilisera par exemple, une feuille en caoutchouc naturel ou encore en caoutchouc synthétique ou artificiel tel que le caoutchouc styrène butadiène (SBR), le caoutchouc chloroprène, le caoutchouc nitrile butadiène (NBR) ou le caoutchouc isoprène (IR). La feuille **6** présente de façon avantageuse et indépendante une épaisseur comprise de 0,15 à 0,5 mm, une densité de 0,9 à 1,25, un module de contrainte de 0,15 à 2 MPa, de préférence supérieur ou égal à 0,5 MPa pour 100 % de déformation et un allongement à la rupture de 50 à 600 % de préférence supérieur ou égal à 400 %. Est particulièrement adaptée à la présente invention, une feuille de caoutchouc naturel d'une épaisseur de 0,3 à 0,4 mm, de densité 1,1 et présentant un module de contrainte de 1,1 MPa pour 100 % de déformation et un allongement à la rupture supérieur à 600 %.

Par ailleurs, cette feuille **6** est traitée, sur au moins l'une de ses faces, de préférence, sur sa face **6₁** située à l'opposé de la nappe **2,** pour améliorer l'adhérence de toute résine ultérieurement injectée, lors de la conception de la pièce moulée. Ce traitement consiste à associer la face **6₁** de la feuille élastomère à un non-tissé **7.**

De manière avantageuse, il peut également être prévu, comme le montre la fig. **3****,** que la feuille **6** en élastomère soit également traitée sur sa face **6₂** située du côté de la nappe **2** pour améliorer l'adhérence d'une résine injectée de ce côté de la feuille **6** en élastomère. De ce côté, l'accrochage de la résine est déjà facilité par la présence de la nappe **2**. Dans ce cas, la feuille élastomère **6** est avantageusement associée sur sa face **6₁** à un non-tissé **7** et sur sa face **6₂** à un autre non-tissé **8**. Les non-tissés **7** et **8** sont, par exemple, disposés sur les faces de la feuille **6** en élastomère lors de la réalisation de cette dernière. La liaison est notamment réalisée par thermocompressage.

Les non-tissés **7** et **8** possèdent, de préférence, une porosité choisie en fonction de la nature et de la viscosité des résines à l'état d'injection qui seront utilisées lors de la fabrication des pièces moulées ultérieures. Les non-tissés **7** et **8** sont, de préférence mais non exclusivement, à base de fibres de même nature, en particulier des fibres courtes liées mécaniquement. Selon un mode de réalisation particulier, le non-tissé **7** et le cas échéant le non-tissé **8** sont à base de fibres de polyéthylène téréphtalate ou d'acrylique de titre compris entre 0,5 et 6,7 décitex et présentent une densité de surface de 20 à 100 g/m².

Il apparaît donc que le renfort fibreux **1** selon l'invention est constitué d'une pluralité de couches. La cohésion du renfort **1** est assurée par couture ou tricotage. Cette couture-tricotage permet de lier la nappe **2** avec la feuille **6** en élastomère associée à un ou deux non-tissés **7** et **8**. En général, la couture-tricotage **5** sert à la fois pour lier la couche de renfort **4** à l'âme **3** pour former la nappe **2** et lier cette nappe **2** à la feuille en élastomère **6**. Cette couture-tricotage est par exemple réalisée à l'aide d'un fil synthétique.

Il apparaît donc que la présence de la feuille **6** en élastomère constitue une caractéristique essentielle de l'invention. Cette feuille **6** doit, même après couture ou tricotage, assumer sa fonction de barrière étanche. La feuille en élastomère **6**, de part sa souplesse et son élasticité, se resserre autour du fil de couture-tricotage après le passage de l'aiguille de façon à assurer l'étanchéité. La fonction de la feuille **6** est, lors de la conception des pièces moulées, de s'opposer à la migration de la résine thermoplastique ou thermodurcissable qui est injectée à l'état liquide ou pâteux. Ainsi, avant que la polymérisation soit totale et/ou que le durcissement de la résine soit obtenue, cette dernière reste confinée d'un côté ou de l'autre de feuille en élastomère **6**.

Le renfort fibreux selon l'invention est donc à la fois souple, déformable et étanche. Ainsi, il est parfaitement adapté à la réalisation de préformes ou de pièces composites moulées. Sa vocation est de constituer une armature de renforcement pour une telle pièce composite, qui est obtenu, non nécessairement par moulage et conformation, mais principalement par injection d'une ou plusieurs résines en particulier thermoplastiques ou thermodurcissables.

La présente invention concerne également les pièces composites moulées composées au moins pour partie d'un renfort fibreux selon l'invention, allié à au moins deux matrices de résine thermodurcissable confinées chacune de part et d'autre de la feuille élastomère. Une telle pièce moulée est partiellement représentée à la **fig. 4****.** Deux résines **9** et **10** sont injectées de part et d'autre du renfort fibreux **1**. D'une manière avantageuse, une pièce composite selon l'invention est composée au moins pour partie d'une première matrice **9** en résine thermodurcie par exemple, de vinylester, polyester ou de résine époxy ou phénolique, ou bien de résine thermoplastique située au moins en partie dans la nappe fibreuse, et séparée par la feuille élastomère **6** d'une seconde matrice **10** de polyuréthane.

Les résines thermoplastiques ou thermodurcissables sont injectées à l'état liquide ou pâteux d'un côté ou de l'autre du renfort fibreux **1** selon l'invention. La résine injectée **9** dans la nappe **2** constitue une matrice pour les fibres de cette dernière qui est incorporée à l'intérieur de l'épaisseur de paroi en résine. Avant que la polymérisation ne débute, la feuille **6** en élastomère joue son rôle de barrière étanche et aucune migration de la résine de l'autre côté du renfort **1** ne peut donc intervenir. Il devient ainsi aisé de réaliser pratiquement à un coût intéressant des corps conforme allégés ou des corps ou masses de remplissage allégés.

La résine **9** de type polyester est généralement injectée du côté du renfort fibreux afin de constituer une paroi renforcée. La résine **10** de type polyuréthane est injectée de l'autre côté et constitue après durcissement le volume de la pièce composite tout en étant de faible poids.

A l'état d'injection, la résine thermodurcissable **10** constituée de polyuréthane adhère difficilement sur la feuille en élastomère c'est pourquoi il est préférable que la feuille **6** soit associée sur sa face **6₁** située côté polyuréthane à un non-tissé **7.** Par contre, à l'état d'injection, la résine **9** constituée d'une résine polyester thermodurcissable ou d'une résine thermoplastique adhère plus facilement à la feuille en élastomère **6**, si bien que le non-tissé 8 peut être supprimé.

Ces pièces composites et préformes sont réalisées selon des techniques classiques bien connues de l'homme de l'art.

Les renforts fibreux **1** et pièces composites selon l'invention pourront être utilisés pour la fabrication de structures de bateaux tels que les capots, trappes, safrans, gouvernails, ailerons, portiques, pour la fabrication de structures de véhicules tels que des capots de coffre, hayons ou rétroviseurs ou encore de pièces industrielles ou d'articles de sport et loisir, ou des pales d'éolienne.

L'invention n'est pas limitée aux exemples décrits et représentés car diverses modifications peuvent y être apportées sans sortir de son cadre.

## Revendications

1. Renfort fibreux **(1)** pour la réalisation de pièces composites moulées à base de résine **(9, 10)** injectée, du type comprenant au moins une nappe **(2)** à base de fibres de renfort,
**caractérisé en ce que** la nappe **(2)** est liée par couture ou tricotage à une feuille **(6)** en élastomère s'étendant sur l'une des grandes faces de la nappe **(2)** et assumant une fonction de barrière pour toute résine **(9, 10)** injectée d'un côté ou de l'autre de cette feuille **(6),** ladite feuille **(6)** en élastomère étant associée à un non-tissé **(7, 8),** au moins sur l'une de ses faces **(6₁, 6₂),** pour améliorer l'adhérence d'une résine **(9, 10)** injectée de ce côté de la feuille **(6).**

2. Renfort fibreux **(1)** selon la revendication 1, **caractérisé en ce que** la feuille **(6)** en élastomère est associée à un non-tissé **(7),** au moins sur sa face **(6₁)** opposée à la nappe **(2).**

3. Renfort fibreux **(1)** selon la revendication 1 ou 2, **caractérisé en ce que** la feuille **(6)** en élastomère est associée à un non-tissé **(7** et **8),** sur chacune de ses faces **(6₁** et **6₂),** pour améliorer l'adhérence d'une résine **(9, 10)** injectée de chaque côté de la feuille **(6).**

4. Renfort fibreux **(1)** selon l'une des revendications 1 à 3, **caractérisé en ce que** la feuille **(6)** en élastomère est en caoutchouc naturel ou synthétique.

5. Renfort fibreux **(1)** selon l'une des revendications 1 à 4, **caractérisé en ce que** le non-tissé **(7, 8)** possède une porosité choisie en fonction de la nature et de la viscosité de la résine injectée **(9, 10).**

6. Renfort fibreux **(1)** selon la revendication 5, **caractérisé en ce que** le non-tissé **(7, 8)** est à base de fibres de polyéthylène téréphtalate ou d'acrylique de titre compris entre 0,5 et 6,7 dtex et présente une masse surfacique de 20 à 100 g/m².

7. Pièce composite moulée obtenue à partir d'un renfort fibreux **(1)** selon l'une des revendications 1 à 6, et d'au moins deux matrices de résine thermoplastique ou thermodurcie **(9, 10)** confinées chacune de part et d'autre de la feuille **(6)** en élastomère.

8. Pièce composite selon la revendication 7, **caractérisée en ce qu'**elle est obtenue à partir d'une première matrice **(9)** de polyester, vinylester, résine époxy ou phénolique située au moins en partie dans la nappe **(2)** et séparée par la feuille **(6)** en élastomère d'une seconde matrice **(10)** de polyuréthane.

9. Utilisation d'un renfort fibreux **(1)** selon l'une des revendications 1 à 6 ou d'une pièce composite selon la revendication 7 ou 8 pour la fabrication de structures de bateaux tels que les capots, trappes, safrans, gouvernails, ailerons, portiques, pour la fabrication de structures de véhicules tels que des capots de coffre, hayons ou rétroviseurs ou encore de pièces industrielles ou d'articles de sport et loisir ou des pales d'éoliennes.

## Claims

1. Fibrous stiffener **(1)** for making composite parts molded from an injected resin base **(9, 10),** of the type comprising at least one layer **(2)** based on stiffening fibers,
**characterized in that** the layer **(2)** is connected by sewing or stitching to an elastomer sheet **(6)** extending over one of the wide faces of the layer **(2)** and performing a barrier function for any resin **(9, 10)** injected on one side or the other side of this sheet **(6),** the said elastomer sheet **(6)** being associated with a non-woven material **(7, 8),** on at least one of its faces **(6₁, 6₂),** to improve the adhesion of a resin **(9, 10)** injected on this side of the sheet **(6).**

2. Fibrous stiffener **(1)** according to claim 1, **characterized in that** the elastomer sheet **(6)** is associated with a non-woven material (7), at least on its face (6₁) opposite the layer **(2).**

3. Fibrous stiffener **(1)** according to claim 1 or 2, **characterized in that** the elastomer sheet **(6)** is associated with a non-woven material **(7** and **8),** on each of its faces **(6₁** and **6₂),** to improve adhesion of a resin **(9, 10)** injected on each side of the **sheet (6).**

4. Fibrous stiffener **(1)** according to one of claims 1 to 3, **characterized in that** the elastomer sheet **(6)** is made of a natural rubber or a synthetic rubber.

5. Fibrous stiffener **(1)** according to one of claims 1 to 4, **characterized in that** the porosity of the non-woven material **(7, 8)** is chosen as a function of the nature and the viscosity of the injected resin **(9, 10).**

6. Fibrous stiffener **(1)** according to claim 1, **characterized in that** the non-woven material **(7, 8)** is based on polyethylene terephthalate or acrylic fibers with a titer of between 0.5 and 6.7 dtex and has a surface density of 20 to 100 g/m².

7. Molded composite part obtained from a fibrous stiffener **(1)** according to one of claims 1 to 6, and at least two thermoplastic or thermosetting resin matrices **(9, 10)** each confined on each side of the elastomer sheet **(6).**

8. Composite part according to claim 7, **characterized in that** it is obtained from a first matrix **(9)** made of polyester, vinylester, epoxy or phenolic resin located at least partly in the layer **(2)** and separated by the elastomer sheet **(6)** from a second polyurethane matrix **(10).**

9. Use of a fibrous stiffener **(1)** according to one of claims 1 to 6 or a composite part according to claim 7 or 8 to make boat structures such as covers, doors, rudder blades, rudders, bossing plates, portal frames, for making vehicle structures such as trunk doors, tailgates or rear view mirrors, or industrial parts or sports and leisure articles, or wind generator blades,

## Patentansprüche

1. Faserverstärkung (1) für die Ausbildung von Verbundformteilen auf der Basis von eingespritztem Harz (9, 10), von der Art umfassend wenigstens eine Lage (2) auf der Basis von Verstärkungsfasern, **dadurch gekennzeichnet, daß** die Lage (2) mit einer Elastomerfolie (6), die sich über eine der großen Flächen der Lage (2) erstreckt und eine Barrierefunktion für jedes auf der einen oder der anderen Seite dieser Folie (6) eingespritzte Harz (9, 10) übernimmt, vernäht oder verwirkt ist, wobei die Elastomerfolie (6) wenigstens auf einer ihrer Seiten (6₁, 6₂), einem Vlies (7, 8) zugeordnet ist, um die Haftung eines auf dieser Seite der Folie (6) eingespritzten Harzes (9, 10) zu verbessern.

2. Faserverstärkung (1) nach Anspruch 1, **dadurch gekennzeichnet, daß** die Elastomerfolie (6) wenigstens auf ihrer der Lage (2) gegenüberliegenden Seite (6₁) einem Vlies (7) zugeordnet ist.

3. Faserverstärkung (1) nach Anspruch 1 oder 2, **dadurch gekennzeichnet, daß** die Elastomerfolie (6) auf einer jeden ihrer Seiten (6₁, 6₂) einem Vlies (7, 8) zugeordnet ist, um die Haftung eines auf jeder Seite der Folie (6) eingespritzten Harzes (9, 10) zu verbessern.

4. Faserverstärkung (1) nach einem der Ansprüche 1 bis 3, **dadurch gekennzeichnet, daß** die Elastomerfolie (6) aus Naturkautschuk oder synthetischem Kautschuk besteht.

5. Faserverstärkung (1) nach einem der Ansprüche 1 bis 4, **dadurch gekennzeichnet, daß** das Vlies (7, 8) eine Porosität aufweist, die in Abhängigkeit der Art und der Viskosität des eingespritzten Harzes (9, 10) gewählt ist.

6. Faserverstärkung (1) nach Anspruch 5, **dadurch gekennzeichnet, daß** das Vlies (7, 8) auf der Basis von Polyethylenterephthalat- oder Acryl-Fasern mit einem Titer im Bereich zwischen 0,5 und 6,7 dtex besteht und eine flächenbezogene Masse von 20 bis 100 g/m² aufweist.

7. Verbundformteil, das aus einer Faserverstärkung (1) nach einem der Ansprüche 1 bis 6 sowie aus wenigstens zwei Matrizes aus Thermoplast oder Duroplast (9, 10), die jeweils auf beiden Seiten der Elastomerfolie (6) begrenzt sind, erhalten wird.

8. Verbundteil nach Anspruch 7, **dadurch gekennzeichnet, daß** es aus einer ersten Matrix (9) aus Polyester, Vinylester, Epoxid- oder Phenolharz, die sich wenigstens teilweise in der Lage (2) befindet und durch die Elastomerfolie (6) von einer zweiten Matrix (10) aus Polyurethan getrennt ist, erhalten wird.

9. Verwendung einer Faserverstärkung (1) nach einem der Ansprüche 1 bis 6 oder eines Verbundteils nach Anspruch 7 oder 8 für die Herstellung von Schiffstrukturen, wie Abdeckungen, Klappen, Ruderblättern, Steuerrudern, Flossenkielen, Aufbauten, für die Herstellung von Fahrzeugstrukturen, wie Kofferraumdeckeln, Heckklappen oder Rückspiegeln, oder aber von Industrieteilen oder Sport- und Freizeitartikeln oder Blättern von Windkraftanlagen.
